# EUROPEAN PATENT APPLICATION

(11) **EP 3 401 321 A1**
(43) Date of publication of application: **14.11.2018**
(21) Application number: 16883802.7
(22) Date of filing: 21.12.2016
(51) Int. Cl.: C07F 9/6574, C08K 5/5397, C08L 101/00, C09K 21/12

(54) **ORGANOPHOSPHORUS COMPOUND AND FLAME RETARDANT AGENT COMPRISING SAME, AND METHOD FOR PRODUCING ORGANOPHOSPHORUS COMPOUND**

(30) Priority: 08.01.2016 JP 2016002875; 13.07.2016 JP 2016138415
(71) Applicant: Maruzen Petrochemical Co., Ltd., Tokyo 104-8502 (JP)
(72) Inventor: YAMAZAKI Tadashi, Ichihara-shi Chiba 290-8503 (JP); IIZUKA Tetsuya, Ichihara-shi Chiba 290-8503 (JP); TAKAHASHI Takashi, Ichihara-shi Chiba 290-8503 (JP); KINAMI Yu, Ichihara-shi Chiba 290-8503 (JP); Yokoo Yusuke, Tokyo 104-8502 (JP)
(74) Representative: Beckmann, Claus
(86) International application number: PCT/JP2016/088178
(87) International publication number: WO 2017/119303

(57) **Abstract**

An object is to provide a novel organophosphorus compound which can impart flame retardancy to an amorphous resin in a smaller addition amount without deteriorating heat resistance and transparency, and also can be applied to a wide range of resins, a flame retardant containing the same, and a method for producing an organophosphorus compound. An organophosphorus compound represented by the following general formula (1) (wherein R¹ and R² are independently hydrogen, an alkyl group having 1 to 15 carbon atoms, an aryl group having 6 to 12 carbon atoms, an aralkyl group having 7 to 15 carbon atoms, or an alkylaryl group having 7 to 15 carbon atoms, R³ and R⁴ are independently an alkyl group having 1 to 15 carbon atoms, an aryl group having 6 to 12 carbon atoms, an aralkyl group having 7 to 15 carbon atoms, an alkylaryl group having 7 to 15 carbon atoms, an alkoxy group having 1 to 15 carbon atoms, an aryloxy group having 6 to 12 carbon atoms, an aralkyloxy group having 7 to 15 carbon atoms, or an alkylaryloxy group having 7 to 15 carbon atoms, provided that R³ and R⁴ may be bound to each other to form a ring, and m and n are independently 1, 2, 3 or 4), a flame retardant containing the same, and a method for producing an organophosphorus compound.

## Description

### Technical Field

The present invention relates to an organophosphorus compound and a flame retardant containing the same, and a method for producing an organophosphorus compound.

### Background Art

Heretofore, as a flame retardant to be used in a thermoplastic resin, a halogen-based flame retardant has been widely used as a representative flame retardant. However, the halogen-based flame retardant generates a toxic gas depending on incineration conditions, and therefore, recently, the use thereof is avoided from the viewpoint of environment and safety.

Therefore, as a flame retardant recognized to be more environmentally friendly than the halogen-based flame retardant, a phosphorus-based flame retardant is widely used. As the phosphorus-based flame retardant, for example, a phosphoric acid ester-based flame retardant such as bisphenol A condensed diphenyl phosphate ester or resorcinol condensed dixylenyl phosphate ester is known.

However, such a phosphoric acid ester-based flame retardant has a problem that when it is kneaded by heating at a high temperature with a resin having an ester bond moiety such as a polycarbonate-based resin, a polyester-based resin, or a polyacrylic resin, the molecular weight of the resin is decreased by a transesterification reaction so as to decrease heat resistance, mechanical strength, etc. Further, the phosphoric acid ester-based flame retardant has a problem that it is gradually hydrolyzed by reacting with moisture or the like in the air depending on the using environment to generate a phenol derivative, phosphoric acid, or the like, and thus, the flame retardant performance is decreased, or the molecular weight of the resin is further decreased, and so on.

Further, a resin for optical use needs to have excellent transparency, however, when a phosphoric acid ester-based flame retardant is used, pyrolysis or hydrolysis during molding processing causes coloration of the resin in some cases. Moreover, depending on the type of resin and the using environment, due to the hydrolysis or the like of the phosphoric acid ester-based flame retardant itself over time, the transparency of the resin is lost in some cases.

Further, many of the phosphoric acid ester-based flame retardants have a phosphorus element content of 10 mass% or less, which is low, and therefore, in order to impart sufficient flame retardancy, it is necessary to add a large amount, and thus, there is a problem that the deterioration of the appearance, heat resistance, mechanical properties, etc. of a molded material is significant.

On the other hand, an organophosphorus compound derived from 9,10-dihydro-9-oxa-10-phosphaphenanthrene-10-oxide (hereinafter referred to as "DOPO") has a cyclic phosphinic acid ester structure and therefore is hardly hydrolyzed, so that it is expected as a favorable flame retardant for a resin which needs to be kneaded by heating at a high temperature such as a polycarbonate-based resin or a polyester-based resin, and various compounds are disclosed (for example, PTL 1).

Further, in PTL 2, an organophosphorus compound containing two 9,10-dihydro-9-oxo-10-phosphaphenanthrene-10-oxide-10-yl groups represented by the following formula (A1) (hereinafter referred to as "Compound (A1)") is disclosed, and it is indicated that the organophosphorus compound has a high melting point and a high phosphorus element content exceeding 10 mass%, and can be favorably used for a polyester-based resin which needs to be kneaded by heating at a high temperature. 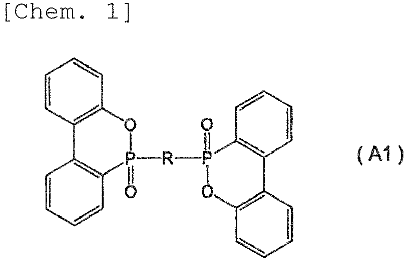 (In the formula, R represents an alkylene group, an alkylene group having ether oxygen in a main chain, an α,α'-xylylene group, or an α,α'-methaxylylene group which may have a substituent in a benzene nucleus, provided that the number of carbon atoms of the alkylene group is from 1 to 12, preferably from 2 to 9.)

Further, in PTL 3 and PTL 4, an organophosphorus compound represented by the following formula (A2) (hereinafter referred to as "Compound (A2)") is disclosed, and it is indicated that the phosphorus compound has a very high melting point and a very high phosphorus element content of 13.5 mass%, and can impart flame retardancy to a resin which needs to be kneaded by heating at a high temperature in a smaller addition amount.

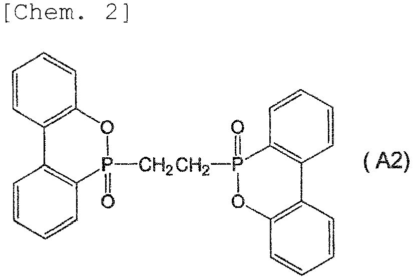

However, an organophosphorus compound containing two 9,10-dihydro-9-oxo-10-phosphaphenanthrene-10-oxide-10-yl groups such as the Compound (A1) or the Compound (A2) has a high melting point and can be favorably used for a high Tg resin such as a polycarbonate-based resin or a polyester-based resin, however, for a polyacrylic resin or the like, the melting point thereof is too high, and therefore, it is not melted under heating and kneading conditions, and the transparency is deteriorated, and thus, it was difficult to use the compound in an optical material or the like.

Further, in PTL 5, a polymer type organophosphorus compound obtained by polymerizing 9,10-dihydro-9-oxa-10-vinyl-10-phosphaphenanthrene-10-oxid e (hereinafter referred to as "Compound (A3)") is disclosed. The Compound (A3) is a polymer type, and therefore can suppress the decrease in the heat resistance or mechanical strength of a resin, but is immiscible with a polycarbonate-based resin or a polyacrylic resin, and therefore deteriorates the transparency, and thus, it was difficult to use the compound in an optical material or the like.

Further, in PTL 6, as a flame retardant which can be used in various transparent resins, 9,10-dihydro-9-oxa-10-phenoxy-10-phosphaphenanthrene-10-ox ide (hereinafter referred to as "Compound (A4)") is disclosed. The Compound (A4) has excellent heat stability in spite of having a relatively small molecular weight, but has only one phosphorus element per molecule and therefore has a phosphorus element content of 10 mass%, which is low, and in order to impart sufficient flame retardancy, it is necessary to increase the addition amount, and thus, there was a problem that the decrease in the heat resistance, mechanical properties, etc. of a resin is significant.

On the other hand, an organophosphorus compound including a 9,10-dihydro-9-oxa-10-phosphaphenanthrene-10-oxide structure can be produced by, for example, reacting two molecules of 9,10-dihydro-9-oxa-10-phosphaphenanthrene-10-oxide (DOPO) with a dihaloethane such as dichloroethane in the presence of a base such as an alkali metal alkoxide (PTL 3). Further, a method for producing the organophosphorus compound by reacting two molecules of DOPO with ethylene glycol in the presence of a catalytic amount of an acid catalyst such as a halide or methanesulfonic acid is known (PTL 4).

Further, in DOPO or other phosphinic acid derivatives having a P(O)-H bond, a reaction of adding a P(O)-H bond to a carbon-carbon unsaturated bond is known, and the addition reaction is known to proceed in the presence of a catalyst such as a radical initiator such as a peroxide or an azo compound, a base, an acid, or a transition metal. For example, a method for producing an ethylene diphosphinic acid derivative containing two phosphorus atoms in the molecule by subjecting two molecules of an organophosphinic acid derivative and acetylene to an addition reaction using a radical initiator such as a peroxide or an azo compound or a base such as an alkali metal or an alkaline earth metal as a catalyst is known (PTL 7).

Further, it is reported that the reaction of adding a P(O)-H bond to a carbon-carbon unsaturated bond proceeds in an atmosphere containing the air (oxygen) even in the absence of a catalyst, and a reaction example of DOPO with an organophosphorus compound containing a vinyl group such as a vinylphosphonic acid diester is known (NPL 1). In the presence of oxygen, oxygen serves as a radical source so that the reaction proceeds, and therefore, it is considered that the reaction proceeds even in the absence of a radical initiator or the like. In the reaction of DOPO with an organophosphorus compound containing a vinyl group such as a vinylphosphonic acid diester, an organophosphorus compound having one DOPO structure in the molecule and has a high phosphorus content can be synthesized.

However, in a conventional method for reacting DOPO with a dihaloethane or ethylene glycol, a step of removing a catalyst, a halogen compound, or the like is needed, and therefore, the method is disadvantageous in terms of economical efficiency. In particular, the organophosphorus compound including two DOPO structures is generally a crystalline solid and has low solubility in a solvent, and therefore, a simple purification method such as distillation or recrystallization cannot be applied, and it was necessary to exclusively repeat slurry washing with water or an organic solvent. Due to this, a large amount of waste liquid was generated, and the method was extremely disadvantage in terms of industrial practice.

Further, also in the reaction of adding a P(O)-H bond to a carbon-carbon unsaturated bond, a step of removing a catalyst or a catalyst residue is needed in the same manner, and the method was extremely disadvantage in terms of industrial practice. In addition, in the method for performing the addition reaction without using a catalyst in the presence of oxygen, a step of removing a catalyst or the like is not needed, however, when the oxygen concentration is increased, a phosphonic acid derivative is generated by oxidation, and the generation of an adduct is inhibited, and therefore, it is necessary to control the oxygen concentration within a predetermined range. Due to this, a monitor and a control facility for the oxygen concentration are needed in industrial practice.

### Citation List

### Patent Literature

PTL 1: JP-A-53-56250
PTL 2: Japanese Patent No. 3897138
PTL 3: JP-T-2012-527469
PTL 4: JP-T-2013-525276
PTL 5: JP-A-2010-202718
PTL 6: JP-A-2012-12566
PTL 7: JP-T-2012-512213

### Non Patent Literature

NPL 1: "Air-Induced anti-Markovnikov Addition of Secondary Phosphine Oxides and H-Phosphinates to Alkenes", Org. Lett., Vol. 9, No.1, 2007, p 53-55

### Summary of Invention

### Technical Problem

The present invention has been made in view of the problems as described above, and has its object to provide a novel organophosphorus compound which can impart flame retardancy to an amorphous resin in a smaller addition amount without deteriorating heat resistance and transparency, and can be applied to a wide range of resins, and a flame retardant containing the same. Further, the present invention has its object to provide a method for producing an organophosphorus compound including a DOPO structure by a simple method without using a catalyst such as a radical initiator, a base, or a transition metal.

### Solution to Problem

The present inventors made intensive studies in order to avoid the above-mentioned problems, and as a result, they found that a novel organophosphorus compound obtained by a reaction of a specific phosphorus compound including a DOPO structure which is easily available with a phosphorus compound containing an alkenyl group has excellent properties as a flame retardant. Further, the present inventors found that the organophosphorus compound can be produced by performing the reaction at 100°C or higher even without using a catalyst, oxygen, or the like, and thus, completed the present invention.

That is, the present invention is an organophosphorus compound represented by the following general formula (1): 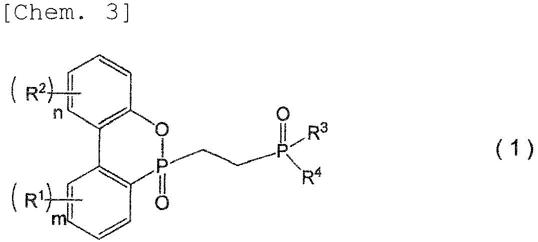 (wherein R¹ and R² are independently hydrogen, an alkyl group having 1 to 15 carbon atoms, an aryl group having 6 to 12 carbon atoms, an aralkyl group having 7 to 15 carbon atoms, or an alkylaryl group having 7 to 15 carbon atoms, R³ and R⁴ are independently an alkyl group having 1 to 15 carbon atoms, an aryl group having 6 to 12 carbon atoms, an aralkyl group having 7 to 15 carbon atoms, an alkylaryl group having 7 to 15 carbon atoms, an alkoxy group having 1 to 15 carbon atoms, an aryloxy group having 6 to 12 carbon atoms, an aralkyloxy group having 7 to 15 carbon atoms, or an alkylaryloxy group having 7 to 15 carbon atoms, provided that R³ and R⁴ may be bound to each other to form a ring, and m and n are independently 1, 2, 3 or 4) .

Further, the present invention is a flame retardant containing the organophosphorus compound.

Further, the present invention is a method for producing the organophosphorus compound which is a method for producing an organophosphorus compound (1) represented by the following general formula (1): 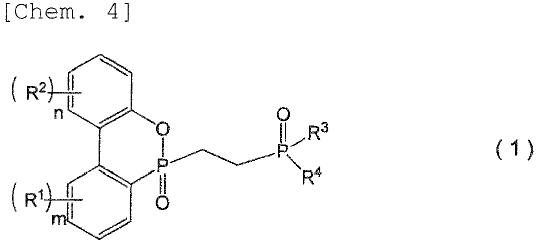 (wherein R¹ and R² are independently hydrogen, an alkyl group having 1 to 15 carbon atoms, an aryl group having 6 to 12 carbon atoms, an aralkyl group having 7 to 15 carbon atoms, or an alkylaryl group having 7 to 15 carbon atoms, R³ and R⁴ are independently an alkyl group having 1 to 15 carbon atoms, an aryl group having 6 to 12 carbon atoms, an aralkyl group having 7 to 15 carbon atoms, an alkylaryl group having 7 to 15 carbon atoms, an alkoxy group having 1 to 15 carbon atoms, an aryloxy group having 6 to 12 carbon atoms, an aralkyloxy group having 7 to 15 carbon atoms, or an alkylaryloxy group having 7 to 15 carbon atoms, provided that R³ and R⁴ may be bound to each other to form a ring, and m and n are independently 1, 2, 3 or 4), and is characterized by reacting an organophosphorus compound (1) represented by the following general formula (2): 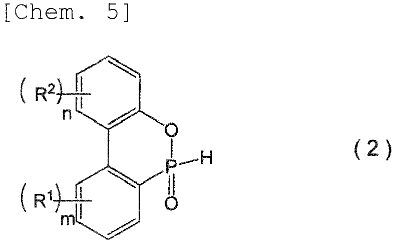 (wherein R¹, R², m, and n have the same definitions as in the formula (1)) with an organophosphorus compound (2) represented by the following general formula (3): 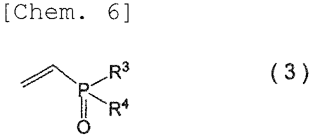 (wherein R³ and R⁴ have the same definitions as in the formula (1)) by heating to 100°C or higher in the absence of oxygen and a catalyst.

### Advantageous Effects of Invention

The organophosphorus compound of the present invention exhibits high heat resistance in spite of having a relatively low melting point and is miscible with a wide range of resins without deteriorating the heat resistance and transparency of the resins. Further, the organophosphorus compound of the present invention has a high phosphorus element content, and therefore can impart sufficient flame retardancy to a resin in a smaller addition amount.

Accordingly, the organophosphorus compound of the present invention can be favorably used as a flame retardant.

Further, according to the method for producing an organophosphorus compound of the present invention, an organophosphorus compound can be easily produced merely by heating only raw materials without using oxygen, a catalyst, or the like at all.

### Description of Embodiments

Hereinafter, the present invention will be described. Incidentally, the following melting points and phosphorus contents are values measured by the methods described in Examples and the structures of compounds are also determined by the methods described in Examples.

### <Organophosphorus Compound>

The organophosphorus compound of the present invention is represented by the following general formula (1).

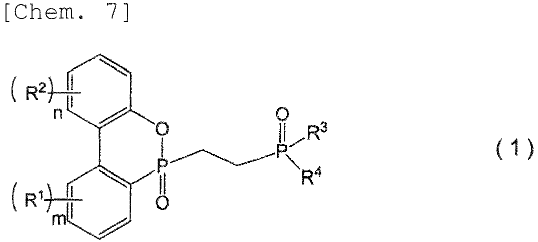

In the above formula (1), R¹ and R² are independently hydrogen, an alkyl group having 1 to 15 carbon atoms, an aryl group having 6 to 12 carbon atoms, an aralkyl group having 7 to 15 carbon atoms, or an alkylaryl group having 7 to 15 carbon atoms, R³ and R⁴ are independently an alkyl group having 1 to 15 carbon atoms, an aryl group having 6 to 12 carbon atoms, an aralkyl group having 7 to 15 carbon atoms, an alkylaryl group having 7 to 15 carbon atoms, an alkoxy group having 1 to 15 carbon atoms, an aryloxy group having 6 to 12 carbon atoms, an aralkyloxy group having 7 to 15 carbon atoms, or an alkylaryloxy group having 7 to 15 carbon atoms, provided that R³ and R⁴ may be bound to each other to form a ring, and m and n are independently 1, 2, 3 or 4. Incidentally, among the organophosphorus compounds represented by the general formula (1), organophosphorus compounds excluding organophosphorus compounds in which when R¹ and R² are hydrogen, R³ and R⁴ are an alkoxy group having 2 carbon atoms and organophosphorus compounds in which when R¹ and R² are hydrogen, R³ and R⁴ are an aryl group having 6 carbon atoms are preferred.

The organophosphorus compound of the present invention is characterized by having a relatively low melting point and a high phosphorus content. The melting point of the organophosphorus compound of the present invention is preferably from 130 to 250°C, more preferably from 135 to 200°C, further more preferably from 140 to 190°C.

Further, the phosphorus content of the organophosphorus compound of the present invention preferably exceeds 10 mass%, and is more preferably 11 mass% or more, further more preferably 12 mass% or more, particularly preferably 13 mass% or more, and the maximum content is 17.6 mass% (a case where R¹ and R² are hydrogen and R³ and R⁴ are a methoxy group).

As a preferred compound among the organophosphorus compounds represented by the above formula (1), an organophosphorus compound represented by the following structural formula (PO) is exemplified.

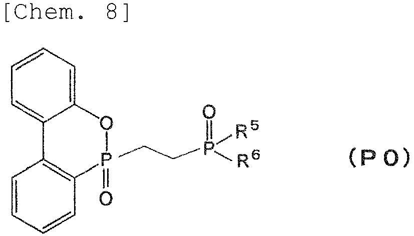

In the above formula (PO), R⁵ and R⁶ each represent a methoxy group or an aryloxy group having 6 to 12 carbon atoms. As the aryloxy group, a phenoxy group, a naphthyloxy group, and the like are exemplified. Further, as a substituent of the aryloxy group, an alkyl group and an alkoxy group each having 1 to 6 carbon atoms, an aryl group and an aryloxy group each having 6 carbon atoms, and the like are exemplified within a range where the number of carbon atoms of the aryloxy group containing the substituent does not exceed 12.

Further, as a particularly preferred compound among the organophosphorus compounds represented by the above formula (1), an organophosphorus compound (compound name: 2-(9,10-dihydro-9-oxo-10-phosphaphenanthrene-10-oxide-10-y l)dimethyl ethylphosphonate, hereinafter referred to as "Compound (P1)") represented by the following structural formula (P1) is exemplified. 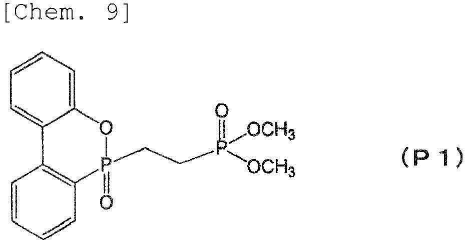 The Compound (P1) has a phosphorus content of 17.6 mass%, which is very high, and therefore can impart high flame retardancy by being added in a small amount.

Further, as a particularly preferred compound among the organophosphorus compounds represented by the above formula (1), an organophosphorus compound (compound name: 2-(9,10-dihydro-9-oxo-10-phosphaphenanthrene-10-oxide-10-y l)diphenyl ethylphosphonate, hereinafter referred to as "Compound (P2)") represented by the following structural formula (P2) is exemplified. 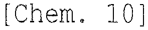 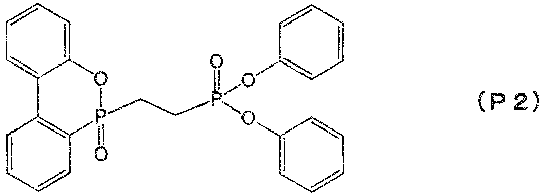 The Compound (P2) has a melting point of 145°C, which is not so high, but has a high decomposition start temperature and also has excellent heat stability, and therefore can be applied to a wide range of resins from general-purpose plastics to engineering plastics.

### <Method for Producing Organophosphorus Compound>

The organophosphorus compound represented by the above formula (1) can be produced by a method in which an organophosphorus compound represented by the above formula (2) and an organophosphorus compound represented by the above formula (3) are reacted by heating to 100°C or higher, or the like. A C=C bond and a P=O group of the organophosphorus compound represented by the above formula (3) are adjacent to each other, and therefore, a conjugate addition reaction proceeds, and the addition reaction easily proceeds merely by heating even in the absence of a base.

The alkyl group having 1 to 15 carbon atoms represented by R¹ to R⁴ in the above formulae (1), (2), and (3) may be any of linear, branched, or cyclic, and more preferably has 1 to 10 carbon atoms. Specifically, for example, linear or branched alkyl groups such as a methyl group, an ethyl group, an n-propyl group, an isopropyl group, an n-butyl group, an isobutyl group, a sec-butyl group, a tert-butyl group, an n-pentyl group, an isopentyl group, a 1-methylbutyl group, a 2-methylbutyl group, a tert-pentyl group, a neopentyl group, a 1,2-dimethylpropyl group, a 1-ethylpropyl group, a 2-ethylpropyl group, an n-hexyl group, an isohexyl group, an n-heptyl group, an isoheptyl group, an octyl group, an isooctyl group, a 2,2,5-trimethylpentyl group, a 2-ethylhexyl group, a nonyl group, an isononyl group, an n-decyl group, and an isodecyl group; and cyclic alkyl groups such as a cyclopentyl group, a cyclohexyl group, a cyclohexylmethyl group, a 2-cyclohexylethyl group, a 2,5-dimethylcyclohexyl group, a 2-isopropyl-5-methylcyclohexyl group, a cycloheptyl group, a cyclooctyl group, a cyclononyl group, and a cyclodecyl group are exemplified.

As the aryl group having 6 to 12 carbon atoms represented by R¹ to R⁴, specifically, a phenyl group, a naphthyl group, a phenanthryl group, an anthracenyl group, a biphenyl group, and the like are exemplified.

As the aralkyl group having 7 to 15 carbon atoms represented by R¹ to R⁴, specifically, a benzyl group, a phenethyl group, a phenylpropyl group, a phenylbutyl group, a phenylpentyl group, a phenylhexyl group, a phenylheptyl group, a phenyloctyl group, and the like are exemplified.

As the alkylaryl group having 7 to 15 carbon atoms represented by R¹ to R⁴, a tolyl group, an ethylphenyl group, an n-propylphenyl group, an iso-propylphenyl group, an n-butylphenyl group, a sec-butylphenyl group, a tert-butylphenyl group, a xylyl group, and the like are exemplified.

Further, the alkoxy group having 1 to 15 carbon atoms represented by R³ and R⁴ in the above formulae (1) and (3) may be any of linear, branched, or cyclic, and more preferably has 1 to 10 carbon atoms. Specifically, for example, linear or branched alkyloxy groups such as a methoxy group, an ethoxy group, an n-propyloxy group, an isopropyloxy group, an n-butoxy group, an isobutoxy group, a sec-butoxy group, a tert-butoxy group, an n-pentyloxy group, an isopentyloxy group, a 1-methylbutoxy group, a 2-methylbutoxygroup, atert-pentyloxy group, a neopentyloxy group, a 1,2-dimethylpropyloxy group, a 1-ethylpropyloxy group, a 2-ethylpropyloxy group, an n-hexyloxy group, an isohexyloxy group, an n-heptyloxy group, an isoheptyloxy group, an octyloxy group, an isooctyloxy group, a 2,2,5-trimethylpentyloxy group, a 2-ethylhexyloxy group, a nonyloxy group, an isononyloxy group, an n-decyloxy group, and an isodecyloxy group; and cyclic alkyloxy groups such as a cyclopentyloxy group, a cyclohexyloxy group, a cyclohexylmethoxy group, a 2-cyclohexylethoxy group, a 2,5-dimethylcyclohexyloxy group, a 2-isopropyl-5-methylcyclohexyloxy group, a cycloheptyloxy group, a cyclooctyloxy group, a cyclononyloxy group, and a cyclodecyloxy group are exemplified.

As the aryloxy group having 6 to 12 carbon atoms represented by R³ and R⁴, specifically, a phenoxy group, a naphthoxy group, a phenanthryloxy group, an anthracenyloxy group, a biphenyloxy group, and the like are exemplified.

As the aralkyloxy group having 7 to 15 carbon atoms represented by R³ and R⁴, specifically, a benzyloxy group, a phenethyloxy group, a phenylpropyloxy group, a phenylbutoxy group, a phenylpentyloxy group, a phenylhexyloxy group, a phenylheptyloxy group, a phenyloctyloxy group, and the like are exemplified.

As the alkylaryloxy group having 7 to 15 carbon atoms represented by R³ and R⁴, a tolyloxy group, an ethylphenoxy group, an n-propylphenoxy group, an iso-propylphenoxy group, an n-butylphenoxy group, a sec-butylphenoxy group, a tert-butylphenoxy group, a xylyloxy group, and the like are exemplified.

Above all, as R¹ and R², a hydrogen atom is preferably exemplified. Further, as R³ and R⁴, an alkoxy group having 1 to 15 carbon atoms, a phenyl group, and a phenoxy group are preferably exemplified.

As the organophosphorus compound (2) represented by the above formula (2) (hereinafter referred to as "Compound (2)"), 9,10-dihydro-9-oxa-10-phosphaphenanthrene-10-oxide (DOPO) represented by the following formula (2-a) is particularly preferably exemplified. 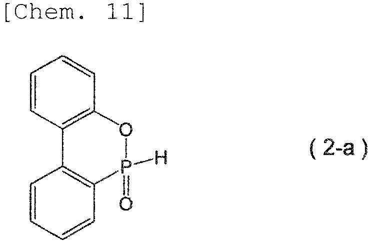 As DOPO, a commercially available product such as (trade name: HCA) manufactured by SANKO Company, Limited can be used.

Specific examples of the organophosphorus compound (3) represented by the above formula (3) (hereinafter referred to as "Compound (3)") include vinylphosphonic acid diesters such as dimethyl vinylphosphonate, diethyl vinylphosphonate, dipropyl vinylphosphonate, diisopropyl vinylphosphonate, dibutyl vinylphosphonate, diisobutyl vinylphosphonate, di(sec-butyl) vinylphosphonate, di(tert-butyl) vinylphosphonate, bis(2-methylpentyl) vinylphosphonate, bis(1,3-dimethylbutyl) vinylphosphonate, dioctyl vinylphosphonate, diisooctyl vinylphosphonate, bis(2-ethylhexyl) vinylphosphonate, didecyl vinylphosphonate, didodecyl vinylphosphonate, dicyclopentyl vinylphosphonate, dicyclohexyl vinylphosphonate, dibenzyl vinylphosphonate, diphenyl vinylphosphonate, ditolyl vinylphosphonate, and dixylyl vinylphosphonate; organic (vinyl)phosphinic acid esters such as methyl methyl(vinyl)phosphinate, ethyl methyl(vinyl)phosphinate, propyl methyl(vinyl)phosphinate, isopropyl methyl(vinyl)phosphinate, butyl methyl(vinyl)phosphinate, isobutyl methyl(vinyl)phosphinate, (sec-butyl) methyl(vinyl)phosphinate, (tert-butyl) methyl(vinyl)phosphinate, cyclohexyl methyl(vinyl)phosphinate, phenyl methyl(vinyl)phosphinate, methyl ethyl(vinyl)phosphinate, ethyl ethyl(vinyl)phosphinate, propyl ethyl(vinyl)phosphinate, isopropyl ethyl(vinyl)phosphinate, butyl ethyl(vinyl)phosphinate, isobutyl ethyl(vinyl)phosphinate, (sec-butyl) ethyl(vinyl)phosphinate, (tert-butyl) ethyl(vinyl)phosphinate, cyclohexyl ethyl(vinyl)phosphinate, phenyl ethyl(vinyl)phosphinate, methyl phenyl(vinyl)phosphinate, ethyl phenyl(vinyl)phosphinate, propyl phenyl(vinyl)phosphinate, isopropyl phenyl(vinyl)phosphinate, butyl phenyl(vinyl)phosphinate, isobutyl phenyl(vinyl)phosphinate, (sec-butyl) phenyl(vinyl)phosphinate, (tert-butyl) phenyl(vinyl)phosphinate, cyclohexyl phenyl(vinyl)phosphinate, and phenyl phenyl(vinyl)phosphinate; and vinylphosphine oxide compounds such as dimethyl(vinyl)phosphine oxide, diethyl(vinyl)phosphine oxide, dipropyl(vinyl)phosphine oxide, diisopropyl(vinyl)phosphine oxide, dibutyl(vinyl)phosphine oxide, diisobutyl(vinyl)phosphine oxide, di(sec-butyl)(vinyl)phosphine oxide, di(tert-butyl)(vinyl)phosphine oxide, dicyclopentyl(vinyl)phosphine oxide, dicyclohexyl(vinyl)phosphine oxide, dibenzyl(vinyl)phosphine oxide, diphenyl(vinyl)phosphine oxide, ditolyl(vinyl)phosphine oxide, dixylyl(vinyl)phosphine oxide, methyl(phenyl)(vinyl)phosphine oxide, ethyl(phenyl)(vinyl)phosphine oxide, propyl(phenyl)(vinyl)phosphine oxide, isopropyl(phenyl)(vinyl)phosphine oxide, butyl(phenyl)(vinyl)phosphine oxide, isobutyl(phenyl)(vinyl)phosphine oxide, sec-butyl(phenyl)(vinyl)phosphine oxide, and tert-butyl(phenyl)(vinyl)phosphine oxide.

Among these, particularly, a vinylphosphonic acid diester is preferably used. In particular, a dialkyl vinylphosphonate such as dimethyl vinylphosphonate or diethyl vinylphosphonate is preferred because an adduct to be obtained therefrom has a high phosphorus content and has excellent flame retardancy and heat resistance.

The vinylphosphonic acid diester is obtained by, for example, an addition reaction of a phosphonic acid diester (a phosphorus acid diester) with acetylene in the presence of a nickel catalyst. Further, as a development product, dimethyl vinylphosphonate, diethyl vinylphosphonate, diphenyl vinylphosphonate, or the like can be obtained from Maruzen Petrochemical Co., Ltd.

Further, R³ and R⁴ may be bound to each other to form a cyclic structure, and as the compound (3) having such a cyclic structure, for example, 9,10-dihydro-9-oxa-10-vinyl-10-phosphaphenanthrene-10-oxid e (hereinafter referred to as "DOVP") represented by the following formula (3-a), and the like are exemplified. 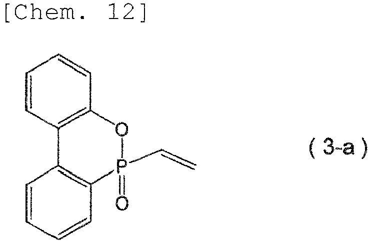 DOVP is obtained by an addition reaction of DOPO with acetylene in the presence of a nickel catalyst. Further, DOVP can be obtained from Maruzen Petrochemical Co., Ltd as a development product.

An adduct obtained by reacting DOPO with DOVP, 6,6'-(1,2-ethanediyl)bis[6H-dibenzo[c,e][1,2]oxaphosphorin -6-oxide] (hereinafter, referred to as "EBDOPO") is represented by the following formula (1-a) and includes two DOPO structures in the molecule, and therefore has excellent flame retardancy and heat resistance.

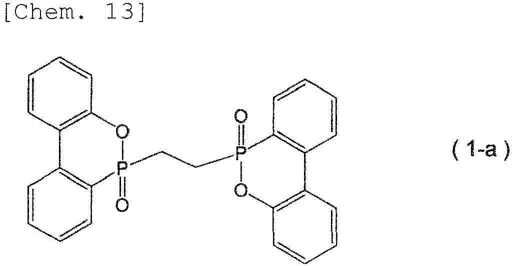

In the present invention, the reaction of the Compound (2) with the Compound (3) is performed in the absence of a catalyst. Here, the catalyst is a catalyst which is generally used in an addition reaction of a compound containing a P(O)-H bond with a vinyl compound, and a radical initiator, a base, an acid, a transition metal, and the like are exemplified. In the method of the present invention, surprisingly, the addition reaction of a compound containing a P(O)-H bond with a vinyl compound easily proceeds in spite of the absence of such a catalyst, and the organophosphorus compound (1) represented by the above formula (1) (hereinafter, referred to as "Compound (1)") can be obtained with a high yield.

Further, in the present invention, the reaction of the Compound (2) with the Compound (3) is performed in the absence of oxygen. In the present invention, the phrase "in the absence of oxygen" means in an inert gas atmosphere where the oxygen concentration is 1 ppm or less or in a reduced pressure of 10 kPa or less. As the inert gas, nitrogen, helium, argon, and the like are exemplified. In the method of the present invention, by performing the reaction in the absence of oxygen, oxidation of the substrate is suppressed, and the reaction yield can be significantly improved.

Considering from the fact that an addition reaction of diphenylphosphine oxide with olefin does not proceed at all in a nitrogen atmosphere and in the absence of a catalyst as described in the above NPL 1, it is very surprising that in the method of the present invention, the addition reaction of a compound containing a P(O)-H bond with a vinyl compound proceeds in the absence of oxygen to serve as a radical source and a catalyst. Although the reason why the reaction proceeds without a radical source in the method of the present invention is not clear, but it is considered that the Compound (2) such as DOPO more easily generates a radical by heating as compared with the other compounds containing a P(O)-H bond such as diphenylphosphine oxide.

Incidentally, although it is different from the production method of the present invention, the reaction of the Compound (2) with the Compound (3) may be performed in the presence of a base in order to increase the reaction rate. As the base, for example, a tertiary amine such as triethylamine, tripropylamine, tributylamine, trioctylamine, ethyldiisopropylamine, diisopropylethylamine, dimethylisopropylamine, dimethylaniline, pyridine, butyldimethylamine, triamylamine, tripentylamine, tetraethylammonium bromide, tetraethylammonium chloride, 1,8-diazacyclo(5,4,0)undec-7-ene, 1,5-diazacyclo(4,3,0)non-5-ene, 1,4-diazabicyclo(2,2,2)octane, or tertiary butyl ammonium hydroxide can be used. In the case where a base is used, the addition amount thereof may be any amount if only the base is allowed to coexist in an amount equivalent to the catalytic amount of the reaction, and can be appropriately set according to the type or the like of the base.

In addition, the reaction easily proceeds under a heating condition of 100°C or higher, and the reaction rate can be increased as the temperature is higher. In consideration of economical efficiency, the reaction temperature is preferably in a range of 100°C to 290°C, more preferably in a range of 120°C to 260°C, and further more preferably in a range of 130°C to 230°C. Since oxygen is not present in the system in the method of the present invention, the substrate is not oxidized even in a reaction at a high temperature of 150°C or higher, and a desired adduct can be obtained with a high yield.

The reaction time is not particularly limited and may be appropriately set according to the reaction temperature or the like, but is generally from about 15 minutes to 48 hours, preferably from about 30 minutes to 24 hours, more preferably from about 1 hour to 12 hours.

In the reaction of the Compound (2) with the Compound (3), the used amount of the Compound (3) may be an equimolar or more with respect to the Compound (2) in stoichiometry, and by using an excess amount, the reaction can be promptly completed. In consideration of economical efficiency, the used amount of the Compound (3) is preferably in a range of 1 to 10 times, more preferably in a range of 1 to 5 times, further more preferably in a range of 1 to 3 times the moles of the Compound (2).

The reaction of the Compound (2) with the Compound (3) may be performed in the presence of a solvent, however, when the concentration is decreased, the reaction rate is decreased, and therefore, from the viewpoint of the yield, reaction time, etc., the reaction is preferably performed without a solvent.

In the case where a reaction solvent is used, in order to maintain the above-mentioned reaction temperature, it is preferred to use a solvent having a boiling point of 100°C or higher, more preferably 150°C or higher, further more preferably 200°C or higher.

As the solvent, specifically, alcohol-based solvents such as n-butanol, isobutanol, methoxyethanol, ethoxyethanol, ethylene glycol, and diethylene glycol; aromatic hydrocarbon-based solvents such as toluene, xylene, ethylbenzene, biphenyl, diphenylmethane, diphenylethane, and diphenylpropane; ether-based solvents such as 1,4-dioxane, dibutyl ether, ethylene glycol diethyl ether, diethylene glycol dimethyl ether, and triethylene glycol dimethyl ether; ether ester-based solvents such as propylene glycol monomethyl ether acetate, ethylene glycol monomethyl ether acetate, ethylene glycol monoethyl ether acetate, and ethylene glycol monobutyl ether acetate; aliphatic ketone-based solvents such as 2-pentanone, 3-pentanone, methyl-n-butyl ketone, methyl isobutyl ketone, methyl-n-amyl ketone, ethyl-n-butyl ketone, di-n-propyl ketone, diisobutyl ketone, and cyclohexanone; aliphatic ester-based solvents such as propyl acetate, butyl acetate, isobutyl acetate, amyl acetate, and isoamyl acetate; amide-based solvents such as N,N-dimethylformamide, N,N-dimethylacetamide, and N-methylpyrrolidone; dimethyl sulfoxide, and the like can be exemplified.

Among these solvents, one type may be used alone, or two or more types may be mixed and used.

In the case where a solvent is used, the used amount thereof is generally in a range of 0.1 to 50 times, preferably in a range of 0.5 to 20 times, more preferably in a range of 1 to 10 times the total amount of the Compound (2) and the Compound (3) in a mass ratio.

The Compound (1) obtained by the reaction of the Compound (2) with the Compound (3) is generally a crystalline solid. In the method of the present invention, a catalyst or the like is not used at all, and therefore, it is not necessary to provide a step of removing the catalyst or the like, and the catalyst cost is also not required.

Further, in the method of the present invention, a catalyst or the like is not contained in the reaction mixture after the reaction, and therefore, the Compound (2) and the Compound (3), which are raw materials, remaining in the solid can be easily removed by slurry washing with a poor solvent of the Compound (1). The desired organophosphorus compound can be obtained by drying through drying under reduced pressure or the like after washing with a poor solvent. As the poor solvent, for example, an alcohol-based solvent such as methanol or isopropanol; a ketone-based solvent such as acetone or 2-butanone; an aromatic hydrocarbon-based solvent such as toluene; or the like can be used. Incidentally, when a poor solvent is added before solidification by cooling the reaction mixture so as to deposit the desired Compound (1), the Compound (1) can be easily recovered from the reaction vessel. Further, the poor solvent which is used for washing and the Compound (3) which is used in excess can be purified and recovered by distillation and reused.

The thus obtained organophosphorus compound of the present invention can be used in, for example, a heat stabilizer, a light stabilizer, a plasticizer, a flame retardant, or the like, but is particularly preferably used in a flame retardant among these uses.

### <Flame Retardant>

The organophosphorus compound of the present invention can impart flame retardancy to a resin by being added to the resin as a flame retardant.

The resin on which the flame retardant of the present invention exhibits an effect is not particularly limited, but an amorphous resin is preferred. As the amorphous resin, for example, thermoplastic resins or thermosetting resins such as a polyolefin-based resin, a polystyrene-based resin, a polyvinyl-based resin, a polyester-based resin, polyether-based resin, a polycarbonate-based resin, a polyacrylic resin, a polyacetal-based resin, a polyether ether ketone resin, a polyphenylene sulfide resin, a polyamide-imide resin, a polyether sulfone resin, a polysulfone resin, a polymethyl pentene resin, a urea resin, a melamine resin, an epoxy resin, a polyurethane resin, and a phenol resin are exemplified.

Incidentally, the flame retardant of the present invention does not inhibit the transparency of a resin to which the flame retardant is added, and therefore can be particularly preferably used in a resin having high transparency such as a polycarbonate-based resin, an amorphous polyester-based resin, or a polyacrylic resin.

In the flame retardant of the present invention, other than the above-mentioned organophosphorus compound, a subcomponent such as a flame retardant aid may be contained within a range that does not impair the effect of the present invention, particularly, within a range that does not inhibit the physical properties such as transparency of an amorphous resin. As the flame retardant aid, an organophosphorus compound other than the organophosphorus compound of the present invention, a nitrogen-containing compound, a sulfur-containing compound, a silicon-containing compound, an inorganic metal-based compound, and the like are exemplified. As the flame retardant aid, one type may be used alone or two or more types may be used in combination.

The content of the flame retardant aid is not particularly limited, and is appropriately set within a range where the ratio of the organophosphorus compound of the present invention to the flame retardant aid (weight ratio) is from 1/99 to 99/1, preferably from 10/90 to 90/10.

The flame retardant of the present invention can be used by being added to a resin. A method for adding the flame retardant of the present invention to a resin is not particularly limited, and for example, a mixing method such as dry mixing, wet mixing, or melt-kneading can be utilized. Among these mixing methods, melt-kneading is preferred because the flame retardant can be uniformly mixed in the resin. More specifically, as the conditions for melt-kneading, conditions in which kneading is performed along with the amorphous resin within a temperature range of 200 to 260°C using a single-screw or twin-screw continuous kneader are exemplified.

The addition amount of the flame retardant of the present invention to a resin is generally within a range of 0.1 parts by weight to 25 parts by weight, preferably within a range of 1 part by weight to 20 parts by weight, more preferably within a range of 3 parts by weight to 16 parts by weight with respect to 100 parts by weight of the resin.

Incidentally, the organophosphorus compound contained in the flame retardant of the present invention has a phosphorus element content of 10 mass% or more, which is high, and therefore, if it is added in an amount of 0.1 parts by weight or more with respect to 100 parts by weight of the resin, the phosphorus content with respect to the resin can be set to 1 mass% or more, and sufficient flame retardancy can be imparted.

### Examples

Hereinafter, the present invention will be described in detail by showing Examples, however, the present invention is not limited to these Examples. Incidentally, in each Example, the measurement of reaction ratios and melting points and the confirmation of products were performed by the following methods. Further, the symbol "%" is on a mass basis unless otherwise specified.

### (1) Measurement of Reaction Ratio

The consumption ratio of DOPO which is a raw material is defined as "reaction ratio", and the measurement was performed by liquid chromatography-mass spectrometry.
Device: LCMS-2010EV, manufactured by Shimadzu Corporation
Column: TSKgel ODS-80Ts QA
Eluent: 55 vol% methanol/an ammonium acetate aqueous solution

### (2) Measurement of Melting Point and Tg

Device: Model DSC-6220, manufactured by Seiko Instruments Inc.
Measurement conditions: temperature elevation rate: 10°C/min, in a nitrogen atmosphere

### (3) Confirmation of Product

In the confirmation of products, identification was performed by 1H-NMR.
Device: JEOL-400
Solvent: deuterated chloroform

### <Synthesis of Organophosphorus Compound>

### Example 1: Synthesis Example of Organophosphorus Compound (1)

The following organophosphorus compound (P1) was synthesized by the following reaction.

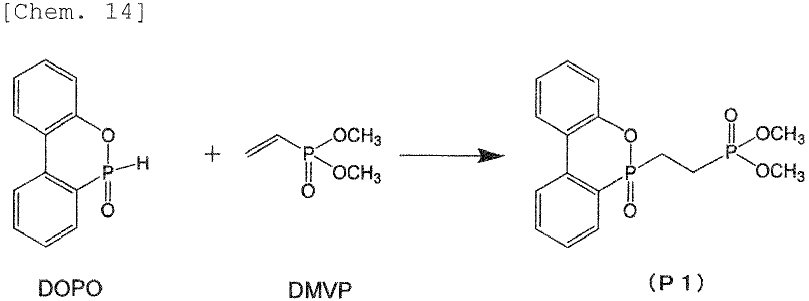

A 300 mL-capacity flask was prepared, and 50.0 g of DOPO was placed in this vessel, and nitrogen replacement was performed. In this vessel, 94.5 g of dimethyl vinylphosphonate (DMVP) was fed, and a reaction was allowed to proceed (DOPO/DMVP = 25/75 (molar ratio)) while maintaining the temperature in the system at 130°C. The reaction solution was let to cool 8 hours after feeding dimethyl vinylphosphonate, and 96.3 g of toluene was added to the reaction solution, thereby depositing a product. The deposited product was recovered by filtration, followed by drying under reduced pressure, whereby 45.35 g of a white solid was obtained (yield: 99.38%). The melting point of the obtained solid was 138°C. Further, the obtained solid was subjected to 1H-NMR measurement, whereby the production of the compound (P1) was confirmed (δ: 2.00 ppm-2.05 ppm (CH₂), 3.64 ppm-3.76 ppm (OCH₃), 7.24 ppm-7.99 ppm (DOPO)).

### Example 2: Synthesis Example of Organophosphorus Compound (2)

The following organophosphorus compound (P2) was synthesized by the following reaction.

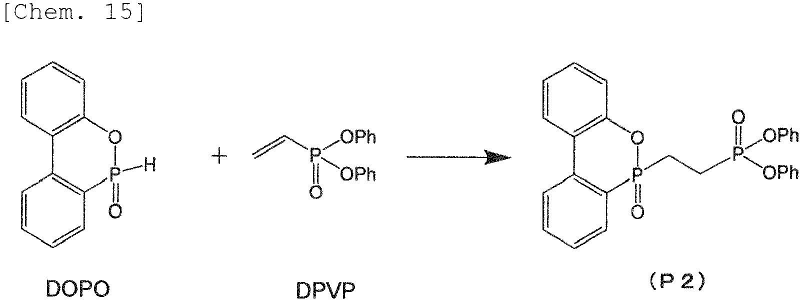

A 500 mL-capacity flask was prepared, and 120.0 g of DOPO was placed in this vessel, and nitrogen replacement was performed. In this vessel, 291.3 g of diphenyl vinylphosphonate (DPVP) was fed, and a reaction was allowed to proceed (DOPO/DPVP = 33/67 (molar ratio)) while maintaining the temperature in the system at 130°C. The reaction solution was let to cool 8 hours after feeding diphenyl vinylphosphonate, and the reaction solution was fed into 1 L of acetone, thereby depositing a product. The deposited product was recovered by filtration, followed by drying under reduced pressure, whereby 65.30 g of a white solid was obtained (yield: 62.67%). The melting point of the obtained solid was 145°C. Further, the obtained solid was subjected to 1H-NMR measurement, whereby the production of the compound (P2) was confirmed (δ: 2.16 ppm-2.47 ppm (CH₂), 7.08 ppm-7.97 ppm (DOPO), 7.17-7.28 (Ph)).

### Example 3: Synthesis Example of Organophosphorus Compound (3)

In a Kugelrohr distillation apparatus, 0.25 g of DOPO, 0.28 g of 9,10-dihydro-9-oxa-10-vinyl-10-phosphaphenanthrene-10-oxid e (DOVP) (DOPO/DOVP = 50/50 (molar ratio)) were placed, and the pressure was reduced to 10 kPa, followed by heating at 200°C for 3 hours. Subsequently, the temperature was elevated to 230°C, and heating was further performed for 1 hour, whereby unreacted DOVP was distilled off from the top of the distillation apparatus. The product was washed by adding methanol to the bottom of the distillation apparatus, and then separated by filtration, followed by drying under reduced pressure, whereby 0.48 g of a white solid was obtained (yield: 90%). As a result of analyzing the white solid by 1H-NMR, it was confirmed that the white solid was desired 6,6'-(1,2-ethanediyl)bis[6H-dibenzo[c,e] [1,2]oxaphosphorin -6-oxide] (EBDOPO).

### Example 4: Synthesis Example of Organophosphorus Compound (4)

In a Kugelrohr distillation apparatus, 0.25 g of DOPO, 0.28 g of DOVP (DOPO/DOVP = 50/50 (molar ratio)) were placed and heated at 200°C for 3 hours in a nitrogen atmosphere. The product was washed with methanol and then separated by filtration, followed by drying under reduced pressure, whereby 0.43 g of a white solid was obtained (yield: 81%). As a result of analyzing the white solid by 1H-NMR, it was confirmed that the white solid was desired EBDOPO.

### Comparative Example 1: Synthesis Example of Organophosphorus Compound (5)

A reaction was performed in the same procedure as in Example 1 except that heating was performed at 80°C for 3 hours. The obtained amount of EBDOPO was 0.006 g (yield: 1.1%).

### Comparative Example 2: Synthesis Example of Organophosphorus Compound (6)

A reaction was performed in the same procedure as in Example 4 except that the reaction was performed in an open system (in the air). The obtained amount of EBDOPO was 0.20 g (yield: 38%).

### Comparative Example 3: Synthesis Example of Organophosphorus Compound (7)

A reaction was performed in the same procedure as in Comparative Example 1 except that the reaction was performed in an open system (in the air). The obtained amount of EBDOPO was 0.0 g (yield: 0.0%).

### <Evaluation of Flame Retardancy>

### Preparation of Flame-Retardant Synthetic Resin Composition

By using the organophosphorus compounds obtained in the above-mentioned Examples 1 and 2, a flame-retardant synthetic resin composition was prepared. The components constituting the flame-retardant synthetic resin composition are composed of a synthetic resin (component A) and a flame retardant (component B), and the respective components are shown below. The respective components shown below were dry-blended according to the blending ratio (parts by mass) shown in Table 1, followed by melt-mixing and extrusion-kneading using a Labo Plastomill, and then the resulting strand was cut, whereby pellet-shaped flame-retardant synthetic resin composition was obtained. From the obtained pellet-shaped flame-retardant synthetic resin composition, a test molded product was produced using a small injection molding machine, and the physical properties were evaluated.

### Synthetic Resin (Component A)

A-1: Panlite (manufactured by Teijin Ltd., polycarbonate, Tg: 150°C)
A-2: Delpet 80N (manufactured by Asahi Kasei Corporation, PMMA, Tg: 113.4°C)

### Flame Retardant (Component B)

B-1: Compound (P1)
B-2: Compound (P2)
B-3: 1,2-bis(9,10-dihydro-9-oxo-10-phosphaphenanthrene-10-oxide -10-yl)ethane
B-4: 9,10-dihydro-9-oxa-10-vinyl-10-phosphaphenanthrene-10-oxid e polymer (Mw = 17000)
B-5: PX-200 (manufactured by Daihachi Chemical Industry Co., Ltd., a condensed phosphoric acid ester)

Incidentally, the results of measuring the phosphorus element content and the melting point (in the case of a polymer, the glass transition temperature) of each flame retardant are shown in Table 1.

**[Table 1]**

| | Phosphorus element content (mass%) | Melting point (°C) | Glass transition temperature (°C) |
|---|---|---|---|
| B-1 | 17.6 | 136 | - |
| B-2 | 13.0 | 145 | - |
| B-3 | 13.5 | 270 | - |
| B-4 | 12.8 | - | 160 |
| B-5 | 9.0 | 95 | - |

### Evaluation of Molded Product of Flame-Retardant Resin Composition

By using the pellet-shaped flame-retardant resin compositions obtained above or test pieces obtained by injection molding the compositions, evaluation was performed by the following methods. The results are shown in Table 2.

### (1) Appearance

Test pieces (80 mm × 10 mm × 4 mm) were prepared by injection molding, and transparency, the presence or absence of coloration, etc. were visually observed (A: colorless and transparent, B: transparent but colored, C: not transparent) .

### (2) Heat Resistance

The heat resistance was evaluated based on the glass transition temperature (Tg).
Device: Model DSC-6220, manufactured by Seiko Instruments Inc.
Measurement conditions: 10°C/min, in a nitrogen atmosphere

### (3) Combustibility

In the evaluation of combustibility, it was evaluated based on an oxygen index (LOI).
Device: Model AC2, manufactured by Toyo Seiki Seisaku-sho, Ltd.
Measurement conditions: according to JIS K 7201-2

**[Table 2]**

| | Blending amount (parts by mass) | | | | | | | Phosphorus content (%) | Appearance | Heat resistance Tg (°C) | Combustibility LOI (O₂%) |
|---|---|---|---|---|---|---|---|---|---|---|---|
| | Resin | | Flame retardant | | | | | | | | |
| | A-1 | A-2 | B-1 | B-2 | B-3 | B-4 | B-5 | | | | |
| Blank 1 | 100 | | | | | | | 0 | A | 113.4 | 17.7 |
| Example 3 | 100 | | 5 | | | | | 1.0 | A | 102.4 | 19.2 |
| Example 4 | 100 | | 8 | | | | | 1.5 | A | 96.8 | 20.5 |
| Example 5 | 100 | | 12 | | | | | 2.2 | A | 87.9 | 21.6 |
| Example 6 | 100 | | | 8 | | | | 1.0 | A | 97.8 | 19.3 |
| Example 7 | 100 | | | 12 | | | | 1.5 | A | 89.2 | 20 |
| Example 8 | 100 | | | 16 | | | | 2.2 | A | 85.5 | 20.6 |
| Comparative Example 1 | 100 | | | | 11 | | | 1.5 | C | 99.6 | 19.8 |
| Comparative Example 2 | 100 | | | | | 12 | | 1.4 | C | 113 | 18.4 |
| Comparative Example 3 | 100 | | | | | | 8 | 0.7 | A | 100.3 | 19.2 |
| Comparative Example 4 | 100 | | | | | | 16 | 1.5 | A | 85.2 | 20.5 |
| Comparative Example 5 | 100 | | | | | | 24 | 2.2 | A | 75.5 | 21.6 |
| Blank 2 | | 100 | | | | | | 0 | A | 150 | 27 |
| Example 9 | | 100 | | 8 | | | | 1.0 | A | 121.5 | 31.7 |
| Example 10 | | 100 | | 10 | | | | 1.3 | A | 115.6 | 34.1 |
| Example 11 | | 100 | | 12 | | | | 1.6 | A | 111.1 | 36.3 |
| Comparative Example 6 | | 100 | | | 8 | | | 1.0 | A | 127.5 | 36.1 |
| Comparative Example 7 | | 100 | | | | 8 | | 1.0 | C | 144 | 33.2 |
| Comparative Example 8 | | 100 | | | | | 8 | 0.7 | A | 122 | 31.8 |
| Comparative Example 9 | | 100 | | | | | 12 | 1.0 | A | 108 | 32.6 |
| Comparative Example 10 | | 100 | | | | | 18 | 1.6 | A | 89.5 | 33.8 |

As apparent also from the results in Table 2, the organophosphorus compound of the present invention can be highly compatible with a wide range of resins, and could impart sufficient flame retardancy by being added in a relatively small amount while ensuring optical properties such as transparency.

On the other hand, the flame retardant B-3 which includes a DOPO structure, but has a high melting point made a resin having a low Tg such as PMMA untransparent, and could not maintain transparency. Further, the resin-like flame retardant B-4 which includes a DOPO structure was not compatible with PMMA and polycarbonate and made them untransparent. On the other hand, the phosphoric acid ester-based flame retardant B-5 maintained the transparency of the resin, however, when the phosphorus element content is 1 mass% or more, the Tg sharply decreases to decrease the heat resistance, and therefore, the blending amount of the flame retardant could not be increased, and therefore, sufficient flame retardancy could not be imparted.

### Industrial Applicability

The organophosphorus compound of the present invention can be highly compatible with a wide range of resins, and can impart sufficient flame retardancy by being added in a relatively small amount while ensuring optical properties such as transparency, and therefore can be used as a flame retardant to be added to a material for use in a variety of electrical components as well as automobile components, building materials, cables, etc.

Further, according to the production method of the present invention, an organophosphorus compound can be produced merely by heating only raw materials without using a catalyst, oxygen, or the like at all. Accordingly, it is not necessary to remove a catalyst or a catalyst residue, control the oxygen concentration, or the like, and therefore, the method is easy as the method for producing an organophosphorus compound, and also is extremely excellent in terms of economical efficiency.

## Claims

1. An organophosphorus compound represented by the following general formula (1): 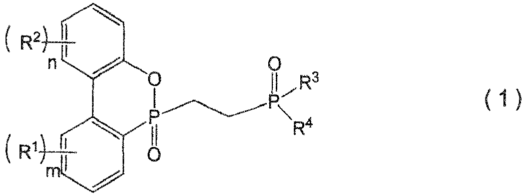 (wherein R¹ and R² are independently hydrogen, an alkyl group having 1 to 15 carbon atoms, an aryl group having 6 to 12 carbon atoms, an aralkyl group having 7 to 15 carbon atoms, or an alkylaryl group having 7 to 15 carbon atoms, R³ and R⁴ are independently an alkyl group having 1 to 15 carbon atoms, an aryl group having 6 to 12 carbon atoms, an aralkyl group having 7 to 15 carbon atoms, an alkylaryl group having 7 to 15 carbon atoms, an alkoxy group having 1 to 15 carbon atoms, an aryloxy group having 6 to 12 carbon atoms, an aralkyloxy group having 7 to 15 carbon atoms, or an alkylaryloxy group having 7 to 15 carbon atoms, provided that R³ and R⁴ may be bound to each other to form a ring, and m and n are independently 1, 2, 3 or 4).

2. An organophosphorus compound represented by the following general formula (P0): 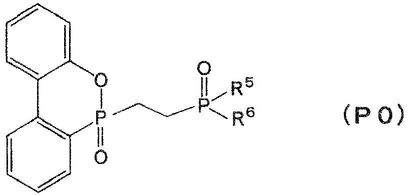 (wherein R⁵ and R⁶ each represent a methoxy group or an aryloxy group having 6 to 12 carbon atoms).

3. An organophosphorus compound represented by the following structural formula (P1):

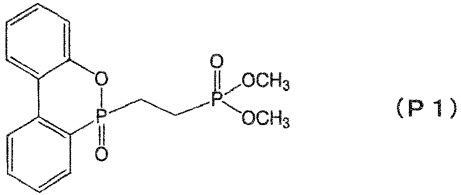

4. An organophosphorus compound represented by the following structural formula (P2):

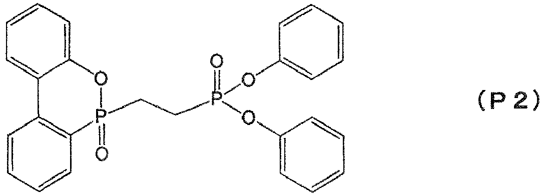

5. A flame retardant comprising the organophosphorus compound according to any one of claims 1 to 4.

6. A method for producing an organophosphorus compound (1) represented by the following general formula (1): 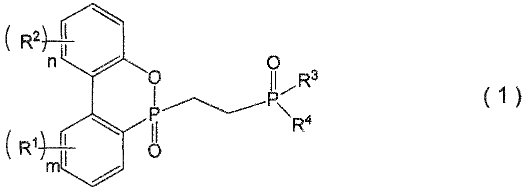 (wherein R¹ and R² are independently hydrogen, an alkyl group having 1 to 15 carbon atoms, an aryl group having 6 to 12 carbon atoms, an aralkyl group having 7 to 15 carbon atoms, or an alkylaryl group having 7 to 15 carbon atoms, R³ and R⁴ are independently an alkyl group having 1 to 15 carbon atoms, an aryl group having 6 to 12 carbon atoms, an aralkyl group having 7 to 15 carbon atoms, an alkylaryl group having 7 to 15 carbon atoms, an alkoxy group having 1 to 15 carbon atoms, an aryloxy group having 6 to 12 carbon atoms, an aralkyloxy group having 7 to 15 carbon atoms, or an alkylaryloxy group having 7 to 15 carbon atoms, provided that R³ and R⁴ may be bound to each other to form a ring, and m and n are independently 1, 2, 3 or 4), comprising reacting an organophosphorus compound (2) represented by the following general formula (2): 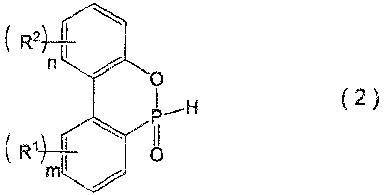 (wherein R¹, R², m, and n have the same definitions as in the formula (1)) with an organophosphorus compound (3) represented by the following general formula (3): 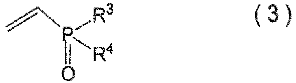 (wherein R³ and R⁴ have the same definitions as in the formula (1)) at 100°C or higher in the absence of oxygen and a catalyst.

7. The method for producing an organophosphorus compound according to claim 6, wherein the organophosphorus compound (2) is a compound represented by the following formula (2-a):

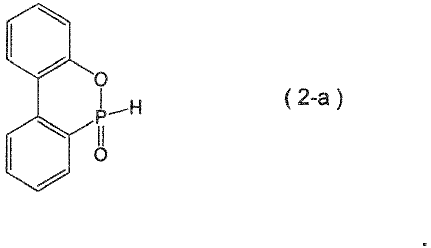

8. The method for producing an organophosphorus compound according to claim 6 or 7, wherein the organophosphorus compound (3) is a vinylphosphonic acid diester.

9. The method for producing an organophosphorus compound according to claim 6, wherein the organophosphorus compound (1) is a compound represented by the following formula (1-a) : 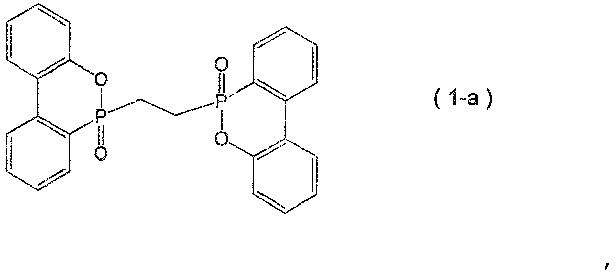 the organophosphorus compound (2) is a compound represented by the following formula (2-a): 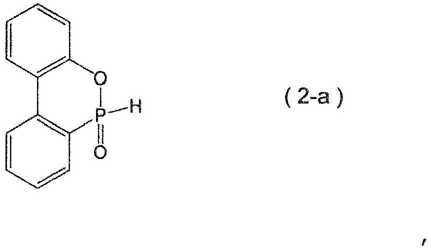 and the organophosphorus compound (3) is a compound represented by the following formula (3-a):

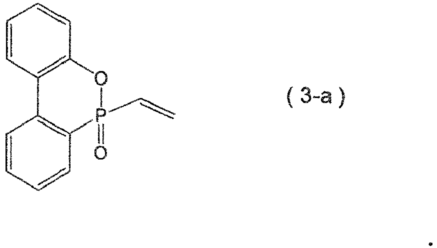

10. The method for producing an organophosphorus compound according to any one of claims 6 to 9, comprising adding a poor solvent to the reaction mixture after the reaction to deposit and recover the organophosphorus compound (1) before the reaction mixture is cooled and solidified.
